# EUROPEAN PATENT APPLICATION

(11) **EP 0 527 445 A2**
(43) Date of publication of application: **17.02.1993**
(21) Application number: 92113483.9
(22) Date of filing: 07.08.1992
(51) Int. Cl.: H04N 7/087, H04N 5/44

(54) **Receiving apparatus for mobile object**

(30) Priority: 09.08.1991 JP 225017/91
(71) Applicant: SONY CORPORATION, Tokyo (JP); LSI JAPAN CO.LTD, Tokyo (JP)
(72) Inventor: Sato, Fumihisa, Shinagawa-ku, Tokyo (JP); Tanaka, Takashi, Shibuya-ku, Tokyo (JP); Kato, Kenichi, Shinagawa-ku, Tokyo (JP); Aozuka, Torao, Shinagawa-ku, Tokyo (JP); Nii, Takehiko, Shinagawa-ku, Tokyo (JP)
(74) Representative: Melzer, Wolfgang, Dipl.-Ing.

(57) **Abstract**

A receiving apparatus for mobile object is disclosed, which comprise means (4) for detecting and selecting a most suitable signal from a plurality of channels (8a, 8b, 8c, and 8d) which are composed of plurality of antennas (1a, 1b, 1c, and 1d) and a plurality of decoders (3a, 3b, 3c, and 3d) which correspond to the plurality of antennas (1a, 1b, 1c, and 1d).

## Description

The present invention relates to a receiving apparatus for a mobile object, in particular, relates to a receiving apparatus for a mobile object suitable for receiving a teletext program.

In recent years, teletext broadcasting systems have been widely operated. In these teletext broadcasting systems, the transmitting section multiplexes to a horizontal scanning line in a vertical blanking interval of a TV signal a text signal constructed of text data, a synchronous code, an error correction code, and so forth so as to form a multiplexed teletext signal. Thereafter, the multiplexed teletext signal is output. On the other hand, the receiving section demultiplexes the teletext signal from the TV signal, decodes into the teletext data, and outputs the teletext data on a TV set.

In the receiving apparatus for receiving the above-mentioned teletext broadcasting program, the direction of directivity of the antenna should be fixed. Thus, when the receiving apparatus is used in a mobile object such as an automobile and a train, the direction of directivity of the antenna varies time by time.

Thus, so far, the receiving apparatus for mobile objects could not receive multiplexed teletext signals. That is, the conventional apparatuses could not almost receive teletext broadcasting programs.

Moreover, in a diversity antenna system which is widely used for TV receivers for mobile objects, there is a receiving system which uses two whip antenna (4 output terminals) and one diversity unit. In this receiving system, the receiving sensitivity is always detected and the two whip antennas are switched at a high speed. However, when this receiving system is used for the above-mentioned teletext receiving apparatus, the following problems take place.
[1] The level of a picture signal is not equal to the sensitivity of a multiplexed teletext signal. In other words, even if the level of the picture signal is satisfactorily high, the sensitivity of the multiplexed teletext signal is not always high.
[2] Since a teletext signal is digital packet data, whenever the two whip antennas are switched, data may be lost.

Therefore, an object of the present invention is to provide a receiving apparatus for a mobile object suitable for receiving a multiplexed teletext signal of a teletext broadcasting program in a good condition regardless of whether the direction of directivity of the antenna varies.

The present invention comprises a means for detecting and selecting a most suitable signal from a plurality of channels which are composed of plurality of antennas and a plurality of decoders which correspond to the plurality of antennas.

TV signals are received from the antennas. The decoders separate teletext signals from the TV signals. Teletext data is decoded from the teletext signals.

Since there are plurality of channels each of which is constructed of a antenna and a decoder, the same multiplexed teletext signals are received from a plurality of channels and thereby the same teletext data are obtained on the plurality of channels.

From the plurality of channels on which the same teletext data are received, correct and most suitable teletext data is selected.

The invention will now be described by way of example with reference to the accompanying drawings, in which:
Figure 1 is a block diagram showing an embodiment of the present invention; and
Figure 2 is a block diagram showing the construction of an extracting section of Figure 1.

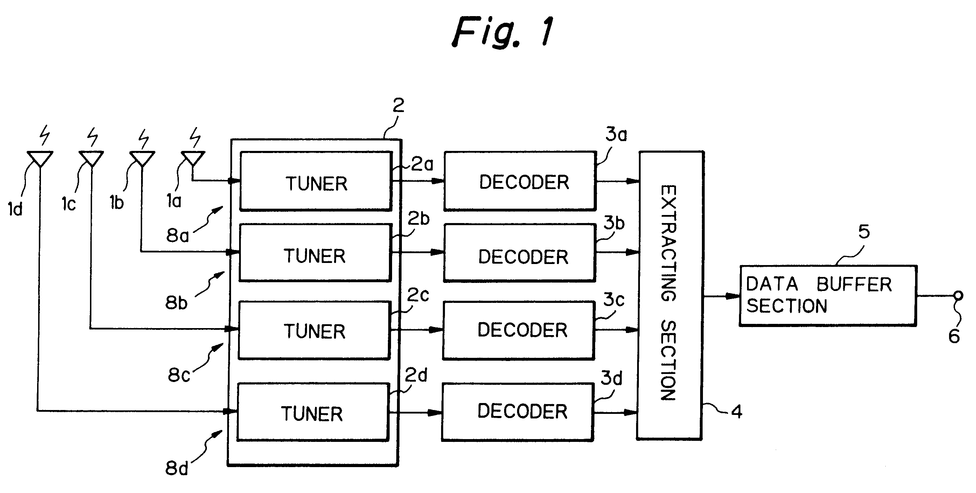

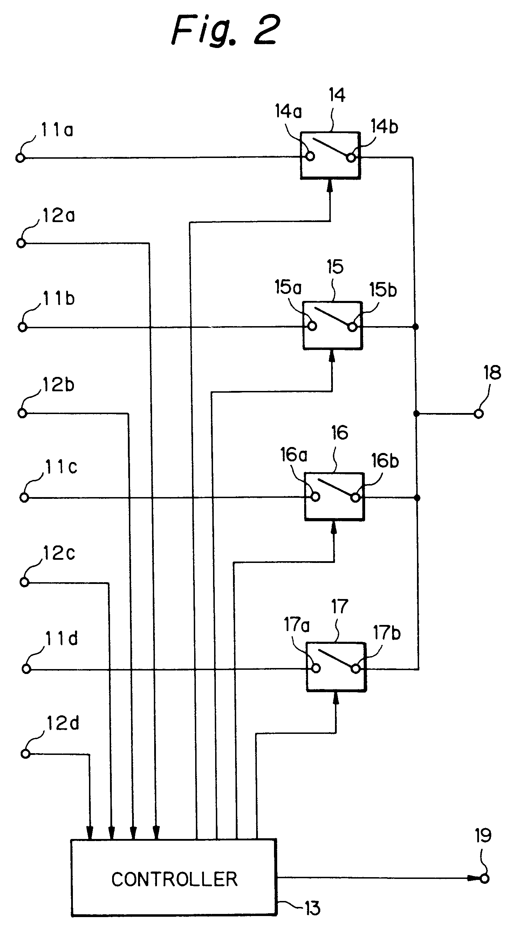

Now, with reference to Figure 1 and Figure 2, an embodiment of the present invention will be described.

Figure 1 is a block diagram showing a receiving apparatus for a mobile object.

In the construction shown in Figure 1, for example four antennas 1a, 1b, 1c, and 1d are disposed on a mobile object in such a way that they can receive TV broadcasting radio waves from any directions.

A TV signal received from the antenna 1a is sent to a tuner 2a. Likewise, TV signals received from other antennas 1b, 1c, and 1d are also sent to tuners 2b, 2c, and 2d, respectively.

In other words, the TV signal received from the antenna 1b is sent to the tuner 2b; the TV signal received from the antenna 1c is sent to the tuner 2c; and the TV signal received from the antenna 1d is sent to the tuner 2d.

The tuners 2a, 2b, 2c, and 2d have a ghost canceling function. That is, the tuners 2a, 2b, 2c, and 2d selectively extract particular TV signals of the same program from the TV signals received from the antennas 1a, 1b, 1c, and 1d.

The TV signals extracted by the tuners 2a, 2b, 2c, and 2d are sent to decoders 3a, 3b, 3c, and 3d, respectively. In the example shown in the figure, the four tuners 2a, 2b, 2c, and 2d are used. However, it should be appreciated that the number of tuners is not limited to four. In other words, one tuner can be used instead of four tuners.

The decoders 3a, 3b, 3c, and 3d separate teletext signals from the TV signals supplied from the tuners 2a, 2b, 2c, and 2d, respectively. In addition, the decoders 3a, 3b, 3c, and 3d convert the teletext signals into the teletext data.

The decoders 3a, 3b, 3c, and 3d (not shown in the figure) detect and correct errors by using error correction code referred to as BEST system. In the BEST system, it is known that an error of 11 bits per data packet (every 272 bits) can be corrected.

In addition, the BEST system can recognize disability of error correction of data packets. Thus, the system can represent the disability of error correction for a data packet whose error cannot be corrected by setting for example an error correction disable flag. Teletext data which were decoded and error-corrected by the decoders 3a, 3b, 3c, and 3d are sent to an extracting section 4 through respective buffer memories.

As shown in Figure 1, a channel 8a is constructed of the antenna 1a, the tuner 2a, and the decoder 3a. A channel 8b is constructed of the antenna 1b, the tuner 2b, and the decoder 3b. A channel 8c is constructed of the antenna 1c, the tuner 2c, and the decoder 3c. A channel 8d is constructed of the antenna 1d, the tuner 2d, and the decoder 3d.

Figure 2 is a block diagram showing the construction of the extracting section.

In the construction shown in Figure 2, a data packet which is received from the decoder 3a through a terminal 11a is sent to a terminal 14a of a switch 14. In case of disability of error correction, an error correction disable flag is sent from the decoder 3a to a controller 13 through a terminal 12a.

A data packet which is received from the decoder 3b through a terminal 11b is sent to a terminal 15a of a switch 15. In case of disability of error correction, an error correction disable flag is sent from the decoder 3h to the controller 13 through a terminal 12b.

A data packet which is received from the decoder 3c through a terminal 11c is sent to a terminal 16a of a switch 16. In case of disability of error correction, an error correction disable flag is sent from the decoder 3c to the controller 13 through a terminal 12c.

A data packet which is received from the decoder 3d through a terminal lid is sent to a terminal 17a of a switch 17. In case of disability of error correction, an error correction disable flag is sent from the decoder 3d to the controller 13 through a terminal 12d.

The controller 13 periodically determines whether the error correction disable flags have been set in accordance with the outputs of the decoders 3a, 3b, 3c, and 3d in each horizontal scanning interval. In the case that any error correction disable flag has been set, the controller 13 individually disconnects the switch 14, 15, 16, or 17 corresponding to the decoder 3a, 3b, 3c, or 3d which has output the error correction disable flag.

Thus, when the controller 13 has detected a correct data packet from one of the channels 8a, 8b, 8c, and 8d, the controller 13 controls the connection states of the switches 14, 15, 16, and 17 in such a way that only the correct data packet is selected.

A correct data packet where the error correction disable flag has not been set is output from the switch which has been selected under the control of the controller 13 from the switches 14, 15, 16, and 17 to a terminal 18. The data packet is sent to the data buffer section 5 and then stored therein.

Thus, the extracting section 4 extracts a correct data packet where the error correction disable flag has not been set on the channels 8a, 8b, 8c, and 8d. The correct data packet is output at each horizontal scanning interval.

When a correct data packet has not been decoded in all the decoders 3 and thereby the error correction disable flag has been set, particular text data representing reception disability, for example, text data "NOT RECEIVED" and/or control signal is output.

A data packet or text data representing reception disability and/or control signal is stored in the data buffer section 5 at each horizontal scanning interval and extracted from the terminal 6. The text data of the data packet or the particular text data representing the reception disability is displayed on a display (not shown in the figure).

Table 1 lists the results of measurement of reception ratios during traveling of an automobile as a mobile object. In this measurement, the receiving apparatus as shown in Figure 1 was used. The antenna has four directivities.

In Table 1, "Discrete" represents the reception ratio in which one tuber 2 receives a teletext broadcasting program, while "Multiplex" represents the reception ratio in which four tuners 2a, 2b, 2c, and 2d receive a teletext broadcasting program.

**Table 1**

| No. | Course | Traveling Time | Reception Ratio (%) | |
|---|---|---|---|---|
| | | | Discrete | Multiplex |
| 1 | Sendagaya → Yotsuya → Tameike → Arc Hills (NG under express way) | 13:44 to 14:08 (24 minutes) | 29 | 62 |
| 2 | Arc Hills → Iikura (Express way) → Shiba Park Traffic jam near Tokyo Tower | 14:09 to 14:25 (16 minutes) | 60 | 90 |
| 3 | Shiba Park → Taishi Toll Gate (70 to 80 km/H) | 14:25 to 14:49 (24 minutes) | 41 | 76 |
| 4 | Taishi Toll Gate → Bay Bridge → Shin Yamashita (Yokohama) | 14:50 to 15:05 (15 minutes) | 41 | 79 |

Table 1 represents that the average reception ratio for discrete mode was 41 %, while that for multiplex mode was 74 %.

According to the above-mentioned embodiment, since the controller 13 selects a correct data packet where the error correction disability flag has not been set from data packets obtained on the four channels 8a, 8b, 8c, and 8d, even if the directions of directivity of the antennas 1a, 1b, 1c, and 1d on a mobile object such as an automobile and a train vary time by time, the receiving apparatus of the present invention can correctly receive a teletext broadcasting program (multiplexed teletext signal) in a good condition.

In addition, unlike the conventional two-whip antenna system where two whip antennas are switched at a high speed in accordance with the reception sensitivity of a picture signal, the receiving apparatus of the present invention can receive a teletext broadcasting program (multiplexed teletext signal) with a high sensitivity and has a resistance to loosing of data.

According to the embodiment, although an example for using four channels 8a, 8b, 8c, and 8d was described, it should be appreciated that the number of channels can be increased or decreased when necessary.

Moreover, according to the embodiment, although an example for displaying text data of a correct data packet where the error correction disable flag has not been set on a display was described, it should be noted that if all data packets obtained from the four channels 8a, 8b, 8c, and 8d, only a data packet with a particular level can be displayed in a situation that part of text is lost.

According to the receiving apparatus for mobile object of the present invention, since correct and most suitable text data is selected from the same text data obtained on a plurality of channels, in the case that the apparatus is used in a mobile object such as an automobile and a train, even if the direction of directivity of antennas vary time by time, the receiving apparatus can receive a teletext broadcasting program (multiplexed teletext signal) in a good condition.

In addition, unlike the conventional systems which switch two whip antennas at a high speed according to the reception sensitivity of a picture signal, the apparatus of the present invention can receive a teletext broadcasting program (multiplexed teletext signal) with a high sensibility and has a resistance to loosing of data.

## Claims

1. A receiving apparatus for a mobile object comprising means (4) for detecting and selecting a suitable signal from a plurality of channels (8a,8b...) which are composed of a plurality of antennas (1a, 1b...) and a plurality of decoders (3a,3b...)which correspond to the plurality of antennas.

2. The receiving apparatus for a mobile object as set forth in claim 1, wherein said signal is a teletext and graphic signal superimposed to a TV signal.

3. The receiving apparatus for a mobile object as set forth in claim 1 or 2, wherein said plurality of antennas (1a,1b...) are disposed on a roof of a mobile object, said plurality of antennas (1a,1b...) being oriented to different directions each other.

4. The receiving apparatus for a mobile object as set forth in anyone of claims 1 to 3, further comprising a switch (14,15...) for determining outputs of said decoders (3a,3b...) in each horizontal scanning interval, detecting whether an error correction disable flag has been set or not, and selecting another decoder when said flag has been set.

5. The receiving apparatus for a mobile object as set forth in claim 4, wherein said apparatus is arranged to output a message representing reception disability when said flag has been set on all said decoders (3a,3b...).
